# EUROPÄISCHE PATENTSCHRIFT

(11) **EP 0 940 415 B1**
(45) Veröffentlichungstag und Bekanntmachung des Hinweises auf die Patenterteilung: **08.10.2003**
(21) Anmeldenummer: 99104109.6
(22) Anmeldetag: 02.03.1999
(51) Int. Cl.: C08G 18/42, C09D 175/06, C08G 18/40, C08G 18/63, C08G 63/199

(54) **Niedermolekulare Polyesterpolyole, deren Herstellung und Verwendung in Beschichtungsmitteln**
Low molecular weight polyesterpolyols, their preparation and use in coatings
Polyesterpolyols à faible poids moléculaire, leur préparation et leur utilisation pour des revêtements

(30) Priorität: 06.03.1998 DE 19809461
(43) Veröffentlichungstag der Anmeldung: 08.09.1999
(73) Patentinhaber: Surface Specialties Austria GmbH, 8402 Werndorf (AT)
(72) Erfinder: Epple, Ulrich Dr., 8042 Graz (AT); Kuttler, Ulrike Dr., 8302 Vasoldsberg (AT); Pietsch, Claudia, 8010 Graz (AT)
(74) Vertreter: Deckers, Hellmuth, Dr.

(56) Entgegenhaltungen:
- EP-A- 0 705 858
- EP-A- 0 776 920
- DATABASE WPI Section Ch, Derwent Publications Ltd., London, GB; Class A23, AN 1973-58996U XP002151043 & JP 48 047595 A (TEIJIN LTD)
- PATENT ABSTRACTS OF JAPAN vol. 017, no. 042 (C-1020), 26. Januar 1993 (1993-01-26) & JP 04 258678 A (TOYOBO CO LTD), 14. September 1992 (1992-09-14)

## Beschreibung

Die heutzutage im Einsatz befindlichen Zweikomponenten-(2 K)-Polyurethanlacke auf Basis von Hydroxylgruppen aufweisenden Polyestern oder Polyacrylaten, von acrylmodifizierten Polyestern oder mit Polyestern modifizierten Polyacrylaten oder Mischungen dieser Harze sind umweltfreundlicher als die aus dem älteren Stand der Technik bekannten, da sie weniger Lösungsmittel zur Verdünnung benötigen, um zu einem spritzfertigen Klarlack oder pigmentierten Lack oder Füller formuliert zu werden. Diese feststoffreichen bzw. lösungsmittelarmen ("high solid") Lacke können nur deshalb hergestellt werden, da die eingesetzten Hydroxylgruppen-haltigen Polymere, auch Bindemittel genannt, trotz ihrem niedrigen Polymerisationsgrad noch eine ausreichend gute physikalische Antrocknung zeigen.

Hierfür müssen diese niedermolekularen Polyole steife Kettenbausteine enthalten, die zum einen die Lösungsviskosität senken und gleichzeitig zu Glasübergangstemperaturen (***T***_{g}) von mindestens 20 °C führen. Gerade bei geringsten Polymerisationsgraden ist die Abhängigkeit der Glasübergangstemperatur vom Polymerisationsgrad drastisch, und Vorhersagen über Additivitätsgleichungen, die die Massenanteile oder die gewichteten molaren Anteile der Bausteine mit der ***T***_{*g*} verknüpfen, sind im allgemeinen nicht gültig. Man ist darauf angewiesen, rein empirisch geeignete Bausteine zu suchen, die als niedermolekulares Polymer dann hoffentlich die oben beschriebenen, gewünschten Eigenschaften aufweisen.

Beispiele von Acrylatpolyolen, die in reiner Form oder als Mischungen diese Anforderungen erfüllen, sind in der EP-A 0 638 591 und der EP-A 0 741 149 beschrieben. Beschichtungsmittel auf Basis dieser verzweigten Polymeren zeichnen sich durch hohe Wetterechtheit, hohe Festkörpergehalte, schnelle Trocknung, lange Topfzeit (mindestens 8 Stunden) und vor allem die universelle Einsatzmöglichkeit in Zwischenschichten und in unpigmentierten und pigmentierten Systemen aus.

Auch gibt es Beispiele von Polyesterpolyolen in der EP-A 0705 858, mit aliphatischen verzweigten und monocyclischen Bausteinen. Diese zeichnen sich durch hohe Wetterechtheit, hohe Festkörpergehalte, gute Elastizität und schnelle Trocknung aus, weisen aber Nachteile hinsichtlich der Haftung auf verschiedenen Untergründen, wie dem "base coat" bei der Autoreparatur und verschiedenen metallischen Untergründen (kaltgewalztem Eisenblech) auf.

Überraschend wurde jetzt gefunden, daß Zweikomponenten-Polyurethanlacke, die die nachstehend näher beschriebenen erfindungsgemäßen niedermolekularen Polyesterpolyole auf Basis ausgewählter Ausgangsmaterialien als Hydroxylgruppen-haltige Komponente enthalten, die oben erwähnten günstigen Eigenschaften besitzen und zudem eine gute Haftung auf dem "base coat" bei der Autoreparatur und verschiedenen metallischen Untergründen aufweisen.

Die erfindungsgemäßen niedermolekularen Polyester-Polyole enthalten aliphatische polycyclische Strukturbausteine. Diese sind mindestens bicyclisch und enthalten jeweils mindestens zwei funktionelle Gruppen, vorzugsweise Hydroxylgruppen. Mindestens zwei der Hydroxylgruppen dieser Bausteine sind vorzugsweise an nicht äquivalente Kohlenstoffatome der cyclischen Strukturen gebunden. Dabei werden solche Kohlenstoffatome als äquivalent bezeichnet, die sich durch eine Symmetrieoperation am entsprechenden unsubstituierten Kohlenwasserstoffgerüst ineinander überführen lassen.

Die besonders gute Eignung der erfindungsgemäßen niedermolekularen Polyester-Polyole ist auf die Auswahl der den niedermolekularen Polyester-Polyolen zugrundeliegenden Ausgangsmaterialien und deren Mengenverhältnis zurückzuführen.

Dabei haben sich solche polycyclischen Verbindungen als besonders geeignet erwiesen, die zwei Hydroxylgruppen als funktionelle Gruppen tragen.

Die gute Haftung beruht beispielsweise insbesondere auf dem Gehalt der niedermolekularen Polyester-Polyole an Bausteinen von 3(4), 8(9)-Bishydroxymethyltricyclo[5.2.1.0^{2,6}]decan ("TCD-Diol"-Isomerengemisch), einem tricyclischen Dialkohol. TCD-Diol ist also einer der bevorzugten erfindungsgemäßen Bausteine.

Gegenstand der Erfindung sind niedermolekulare Polyester-Polyole mit einer gewichtsmittleren molaren Masse M_{w} von max. 2000 g/mol, mit Hydroxylzahlen von 80 bis 300 mg/g und Säurezahlen von 5 bis 35 mg/g, enthaltend die genannten Stoffmengenanteile (in % = mol/100 mol) von Strukturbausteinen abgeleitet von
a) 1 bis 45 % aliphatischen polycyclischen Polyhydroxyverbindungen mit mindestens zwei Hydroxylgruppen pro Molekül,
b) 5 bis 50 % verzweigten aliphatischen acyclischen Dihydroxyverbindungen,
c) 30 bis 50 % aliphatischen cyclischen Polycarbonsäuren
d) 0 bis 30 % aliphatischen acyclischen oder monocyclischen Polyhydroxyverbindungen mit drei oder mehr Hydroxylgruppen pro Molekül, und
e) 0 bis 10 % polyfunktionellen Verbindungen ausgewählt aus aliphatischen linearen und monocyclischen Dihydroxyverbindungen, aliphatischen linearen und verzweigten Dicarbonsäuren, aromatischen Dicarbonsäuren, aromatischen Hydroxycarbonsäuren und Polycarbonsäuren mit drei oder mehr Carboxylgruppen pro Molekül, sowie
f) 0 bis 10 % monofunktionellen Bausteinen ausgewählt aus Monocarbonsäuren und Monoalkoholen,
wobei sich die unter a), b), c), d), e) und f) jeweils angegebenen Stoffmengenanteile zu 100 % ergänzen.

Bevorzugt haben die Verbindungen der Gruppen a) und c) jeweils 2 funktionelle Gruppen (Hydroxyl- bzw. Carboxyl-Gruppen).

Die molaren Massen der Polyesterpolyole werden durch Gelpermeationschromatographie an Polystyrolgel nach üblicher Methode bestimmt. Als Eichsubstanz wird, wie üblich, Polystyrol verwendet.

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{*B*} dieser Probe (Masse des Feststoffes in der Probe bei Lösungen oder Dispersionen); ihre übliche Einheit ist "mg/g".

Bevorzugt werden als Komponente a) polycyclische aliphatische Dihydroxyverbindungen mit 6 bis 20, besonders 7 bis 12 Kohlenstoffatomen wie 3(4), 8(9)-Bishydroxymethyl-tricyclo[5.2.1.0^{2,6}]decan und Pinandiol (2,6,6-trimethyl-bicyclo-[3.1.1]heptan-2,3-diol) eingesetzt. Besonders bevorzugt ist das Isomerengemisch 3(4),8(9)-Bishydroxymethyl-tricyclo[5.2.1.0^{2,6}]decan.

Als Komponente b) werden bevorzugt aliphatische verzweigte acyclische Dihydroxyverbindungen mit 4 bis 12 Kohlenstoffatomen eingesetzt, wie Neopentylglykol, 2-Methyl-propandiol-1,3, 2-Methyl-2-butylpropandiol-1,3, 2,2,4-Trimethyl-1,3-pentandiol, Pinakol, Bishydroxymethylheptan und Trimethylhexandiol.

Als Komponente c) werden die Hydrierungsprodukte der isomeren Phthalsäuren bevorzugt, wie Hexahydrophthalsäure und 1,4-Cyclohexandicarbonsäure.

Geeignete Komponenten d) sind aliphatische Triole wie Glycerin, Trimethyloläthan und Trimethylolpropan, sowie höhere Polyhydroxyverbindungen wie Ditrimethylolpropan,Erythrit,Pentaerythrit, Xylitund Sorbit. Besonders bevorzugtwird Trimethylolpropan.

Statt der Säuren und Hydroxyverbindungen lassen sich zur Synthese der erfindungsgemäßen niedermolekularen Polyester-Polyole auch esterbildende Derivate dieser Verbindungen einsetzen, wie z.B. Ester der Säuren mit niederen aliphatischen Alkoholen (mit 1 bis 4 Kohlenstoffatomen, lineare oder verzweigte, primäre, sekundäre oder tertiäre Alkohole), bevorzugt Methylester, Säureanhydride oder Säurehalogenide, sowie Ester der Hydroxyverbindungen mit flüchtigen organischen Säuren wie z.B. Acetate oder Propionate.

Die Säuren und Hydroxyverbindungen lassen sich auch teilweise oder ganz durch Hydroxysäuren ersetzen, die jeweils mindestens eine Hydroxylgruppe und eine Säuregruppe tragen; bevorzugt sind Verbindungen mit jeweils einer Hydroxyl- und einer Säuregruppe und deren esterbildende Derivate wie beispielsweise Lactone. Geeignete Hydroxysäuren sind beispielsweise γ-Hydroxybuttersäure, δ-Hydroxyvaleriansäure und ε-Hydroxycapronsäure; diese Hydroxysäuren können auch in der Form der Lactone eingesetzt werden. In geringen Mengen (bis zu 10 % der Stoffmenge der Hydroxysäuren oder Diole und Disäuren) lassen sich auch Verbindungen mit einer Säuregruppe und zwei oder mehr Hydroxylgruppen oder auch Verbindungen mit einer Hydroxylgruppe und zwei oder mehr Säuregruppen einsetzen; geeignet sind beispielsweise Hydroxybernsteinsäure und Dimethylolpropionsäure. Man erhält dadurch in geringem Maß verzweigte Polyester.

Neben den bisher beschriebenen Komponenten können auch andere Bausteine e) mit jeweils zwei Hydroxy- oder zwei oder mehr Carboxylgruppen ein Bestandteil der erfindungsgemäßen niedermolekularen Polyesterpolyole sein. Es ist auch möglich, die entsprechenden Sulfonsäuren oder Phosphonsäuren einzusetzen.

Geeignete Edukte e) sind hierbei besonders lineare und monocyclische Dihydroxyverbindungen mit 2 bis 40, bevorzugt 2 bis 20 Kohlenstoffatomen. Als geeignete lineare Diole werden beispielsweise Äthylenglykol, 1,2- und 1,3-Propylenglykol, 1,4-Butandiol und 1,6-Hexandiol. Weiter sind geeignet die oligomeren und polymeren Poly(oxyäthylen- oder -propylen-)glykole. Ebenfalls geeignete cyclische Diole sind Cyclohexandimethanol, Perhydro-Bisphenol A sowie 1,2- und 1,4-Cyclohexandiol.

Geeignete Edukte e) sind auch besonders aliphatische lineare und verzweigte Dicarbonsäuren mit 2 bis 40, bevorzugt 4 bis 36 Kohlenstoffatomen. Unter diesen Verbindungen werden lineare Dicarbonsäuren, wie Oxalsäure, Malonsäure, Glutarsäure, Adipinsäure, Korksäure, Sebacinsäure sowie die sogenannten dimeren Fettsäuren bevorzugt. Geeignete verzweigte aliphatische Dicarbonsäuren sind z. B. Dimethylbernsteinsäure, Butylmalonsäure, Diäthylmalonsäure, Dimethylglutarsäure und Methyladipinsäure. Gegebenenfalls können auch geringe Anteile (bis zu 10 % der Stoffmenge) der aliphatischen Dicarbonsäuren auch durch aromatische Dicarbonsäuren, wie die isomeren Phthalsäuren, 4,4'-Sulfonyldibenzoesäure, 4,4'-Diphenylätherdicarbonsäure und 4,4'-Benzophenondicarbonsäure ersetzt werden. Hierunter fallen auch aromatische Hydroxycarbonsäuren, wie 3,4-Dihydroxybenzoesäure, 2,3-Dihydroxy-4-methylbenzoesäure und 2,3,4-Trihydroxybenzoesäure. Bevorzugt enthalten die erfindungsgemäßen niedermolekularen Polyester-Polyole jedoch keine aromatischen Verbindungen.

Durch Einsatz von mindestens dreibasigen Säuren als Bestandteil der Komponente e) erhält man ebenfalls verzweigte Polyester. Geeignete mehrbasige Säuren sind beispielsweise Cyclohexantricarbonsäure, Trimellithsäure und Butantetracarbonsäure.

Auch können als Komponente f) monofunktionelle Bausteine eingesetzt werden, die die Kettenlänge begrenzen. Beispiele sind aliphatische Monocarbonsäuren mit 6 bis 20 Kohlenstoffatomen, wie 2-Äthylhexansäure, Isononansäure und aliphatische Monoalkohole mit 4 bis 20 Kohlenstoffatomen wie 2-Äthylhexanol, Isononylalkohol oder Isotridecylalkohol.

Die erfindungsgemäß hergestellten, Hydroxyl- und Carboxylgruppen enthaltenden niedermolekularen Polyester-Polyole können noch chemisch oder physikalisch modifiziert werden, z.B. durch Umsetzung mit Isocyanat-Verbindungen oder Oxirangruppen enthaltenden Verbindungen. Die Umsetzung mit Isocyanat-Verbindungen führt am erfindungsgemäßen niedermolekularen Polyester-Polyol zu Urethangruppen. Die Umsetzung mit den Oxiran-Verbindungen führt zu zusätzlichen sekundären OH-Gruppen.

Auch können niedermolekulare Harnstoffderivate, die in der Lackindustrie zu sogenannten "sag controlled"-Acrylatharzen führen, mit eingebaut sein. Hierzu wird z. B. das niedermolekulare Polyester-Polyol in Mischung mit Mono- oder Polyaminen vorgelegt, und geeignete ein- oder mehrfunktionelle Isocyanate zugegeben. Auch können die erfindungsgemäßen niedermolekularen Polyester-Polyole zumindest

teilweise mit Phosphorsäure verestert (modifiziert) sein. Die Polyester-Polyole können in bevorzugter Weise auch mit insbesondere

niedermolekularen Acrylat-Copolymerisaten gemischt werden. Zugleich können die neuen niedermolekularen Polyester-Polyole auch Grundlage von (aufgepfropften) Acrylatpolymerisaten sein, wie in der EP-A 0 776 920 bzw. in der europäischen Patentanmeldung EP-98114777.0 beschrieben. Hierbei kann entweder der Esterharz- (Massenanteil der Acrylatkomponente kleiner als 50 %) oder der Acrylatharzcharakter (Massenanteil der Acrylatkomponente größer als 50 %) überwiegen. Selbstverständlich ist auch eine Zusammensetzung mit gleichen Anteilen

Ester- und Acrylatharz möglich. Die Erfindung betrifft daher auch Gemische enthaltend die niedermolekularen Polyester-Polyole und ein separat oder in Gegenwart dieses Polyester-Polyols durch radikalische Polymerisation hergestelltes Copolymerisat, wobei das dem Copolymerisat zugrundeliegende Monomerengemisch
- mindestens ein olefinisch ungesättigtes Monomeres g) enthält, das ein AlkylEster einer aliphatischen linearen, verzweigten oder cyclischen α,β-ungesättigten Monocarbonsäure oder ein Alkyl-Diester einer olefinisch ungesättigten aliphatischen linearen, verzweigten oder cyclischen Dicarbonsäure mit 1 bis 20, bevorzugt 2 bis 12 Kohlenstoffatomen im linearen, verzweigten oder cyclischen Alkylrest und 3 bis 10, bevorzugt 4 bis 7 Kohlenstoffatomen im Säurerest des Esters ist,
- weiterhin mindestens einen Hydroxyalkylester h) einer der unter g) genannten Mono- oder Dicarbonsäuren, wobei der Hydroxyalkylrest abgeleitet ist von einem mindestens zweiwertigen aliphatischen linearen, verzweigten oder cyclischen Alkohol mit 2 bis 15, bevorzugt 3 bis 8 Kohlenstoffatomen,
- mindestens einer Carbonsäure i) ausgewählt aus den unter g) genannten Monocarbonsäuren und Dicarbonsäuren in unveresterter bzw. bei den Dicarbonsäuren in mit einem der unter g) genannten Alkylreste oder der einem unter h) genannten Hydroxyalkylreste halbveresterter Form, sowie gegebenenfalls
- mindestens einem weiteren olefinisch ungesättigten Monomeren j) ausgewählt aus Vinylaromaten wie Styrol, α-Methylstyrol, Vinyltoluol, Chlorstyrol, Vinylestern von aliphatischen linearen, verzweigten oder cyclischen Monocarbonsäuren mit 2 bis 20, bevorzugt 3 bis 12 Kohlenstoffatomen, Vinylhalogeniden wie Vinylchlorid, Vinylidenchlorid, ungesättigten Nitrilen wie Acryl- und Methacrylnitril, Amiden bzw. Diamiden der unter i) genannten Säuren, Vinyläthern von aliphatischen linearen, verzweigten oder cyclischen Alkoholen mit 1 bis 18 Kohlenstoffatomen, Estern von Glycidyl- oder Methylglycidylalkohol mit olefinisch ungesättigten Carbonsäuren und olefinisch ungesättigten Ketonen mit 4 bis 21 Kohlenstoffatomen.

Diese Gemische können in der Weise hergestellt werden, daß das Copolymerisat dem Polyester-Polyol zugemischt wird, wobei das Massenverhältnis der Festkörper-Anteile des Polyester-Polyols und des Copolymerisats von 1:9 bis 9:1, bevorzugt von 7:3 bis 3:7, beträgt. Die Mischung der beiden Komponenten erfolgt üblicherweise durch inniges Vermischen der Lösungen beider Komponenten. Man spricht in diesem Fall von Mischungen oder "Blends".

Die Gemische können gemäß der Erfindung auch bevorzugt so hergestellt werden, daß die dem Copolymerisat zugrundeliegende Monomerenmischung in Gegenwart des Polyester-Polyols polymerisiert wird, wobei das Verhältnis der Masse des Festkörper-Anteils des Polyester-Polyols und der Masse der dem Copolymerisat zugrundeliegenden Monomerenmischung 9:1 bis 1:9, bevorzugt 7:3 bis 3:7, beträgt. Man spricht in diesem Fall von einem "Schoßpolymerisat".

Die Monomerenmischung enthält in beiden Fällen bevorzugt Massenanteile von
g) 25 bis 80 % Alkyl(meth)acrylaten, deren Alkylreste linear, verzweigt oder cyclisch sein können und 1 bis 15 C-Atome aufweisen,
h) 1 bis 35 % Hydroxyalkyl(meth)acrylaten, deren Hydroxyalkylreste linear, verzweigt oder cyclisch sein können und 2 bis 20 C-Atome aufweisen,
i) 0,5 bis 20 % α,β-ungesättigten Carbonsäuren, und
j) 0 bis 55 % aromatischen Vinylverbindungen oder aliphatischen Vinylestern und Vinyläthern, Vinylhalogeniden, olefinisch ungesättigten Ketonen, Estern von Glycidyl- oder Methylglycidylalkohol mit olefinisch ungesättigten Carbonsäuren oder Nitrilen von α,β-ungesättigten Carbonsäuren,
wobei die Summe *der* Massenanteile für die Komponenten g) bis j) 100 % ergeben muß und die Komponenten g) bis j) vorzugsweise so ausgewählt werden, daß durch Polymerisation dieser Mischung ohne weitere Zusätze theoretisch ein Acrylatcopolymerisat mit einer Säurezahl von mindestens 5 mg/g und einer Hydroxylzahl von 30 bis 190 mg/g resultieren würde. Die Polymerisation erfolgt in Gegenwart von bekannten radikalbildenden Polymerisationsinitiatoren sowie gegebenenfalls eines Reglers.

Die Komponente g) ist bevorzugt ausgewählt aus Estern der Acryl- und Methacrylsäure mit Methanol, Äthanol, n- und iso-Propanol, n-, sek.-, iso- und tert.-Butanol.

Die Komponente h) ist bevorzugt ausgewählt aus Estern der Acryl- und Methacrylsäure mit Glykol, 1,2- und 1,3-Propandiol und 1,4-Butandiol.

Die Komponente i) ist bevorzugt ausgewählt aus Acryl- und Methacrylsäure.

Die Komponente j) ist bevorzugt ausgewählt aus Styrol, den isomeren Vinyltoluolen und α-Methylstyrol.

Die neuen erfindungsgemäßen niedermolekularen Polyester-Polyole besitzen bevorzugt eine gewichtsmittlere molare Masse M_{w} von 500 bis 1500 g/mol, Hydroxylzahlen von bevorzugt 100 bis 250, insbesondere 140 bis 240 mg/g, und Säurezahlen bevorzugt von 10 bis 30, insbesondere 15 bis 25 mg/g, und enthalten bevorzugterweise Stoffmengenanteile (in mol/100 mol = %) von Bausteinen abgeleitet von
a) 7 bis 30 % aliphatischen polycyclischen Polyhydroxyverbindungen mit mindestens zwei Hydroxylgruppen pro Molekül,
b) 10 bis 50 % verzweigten aliphatischen acyclischen Dihydroxyverbindungen,
c) 32 bis 45 % aliphatischen cyclischen Polycarbonsäuren
d) 0 bis 25 % aliphatischen acyclischen oder monocyclischen Polyhydroxyverbindungen mit drei oder mehr Hydroxylgruppen pro Molekül, und
e) 0 bis 5 % polyfunktionellen Verbindungen ausgewählt aus aliphatischen linearen und monocyclischen Dihydroxyverbindungen, aliphatischen linearen und verzweigten Dicarbonsäuren, aromatischen Dicarbonsäuren, aromatischen Hydroxycarbonsäuren sowie Polycarbonsäuren mit drei oder mehr Carboxylgruppen pro Molekül,
wobei sich die unter a), b), c), d) und e) genannten Stoffmengen-Anteile jeweils zu 100 % ergänzen.

Die erfindungsgemäßen niedermolekularen Polyester-Polyole können diskontinuierlich (sog. "batch"-Verfahren) oder kontinuierlich hergestellt werden. Es sind auch mehrstufige Verfahren ohne und mit erhöhtem Druck möglich.

Die erfindungsgemäßen extrem niedermolekularen OH- und COOH-funktionellen Polyester-Polyole können mit frei wählbaren Lösungsmitteln bzw. Lösungsmittelgemischen zu einem wählbaren Anteil angelöst werden.

Die erfindungsgemäßen niedermolekularen Polyester-Polyole - allein und in Mischung - eignen sich besonders gut für lacktechnische Anwendungen in Ein- bzw. Zwei-Komponenten-Systemen, insbesondere für sogenannte "high-solid"-Systeme, also für lösungsmittelhaltige Mischungen mit hohem Festkörper-Massenanteil.

Geeignete Lösungsmittel für die erfindungsgemäßen Oligoesterpolyole bzw.die diese enthaltenden Mischungen sind z.B. aliphatische, cycloaliphatische und aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat und Propylenglykol-methylätheracetat; Äther, wie Äthylenglykolmonoäthyl-, -methyloder -butyl-äther; Glykole; Alkohole; Ketone wie Methylisoamylketon, Methylisobutylketon; Lactone und Gemische derartiger Lösungsmittel. Als Lösungsmittel sind auch Umsetzungsprodukte von Lactonen mit Glykolen oder Alkoholen einsetzbar.

Gegenstand der vorliegenden Erfindung sind weiterhin Beschichtungsmittel, die die erfindungsgemäßen niedermolekularen Polyester-Polyole, gegebenenfalls in Abmischung mit anderen organischen Polyhydroxyverbindungen enthalten. Insbesondere sind Acrylat-Copolymerisate der oben beschriebenen Art als Mischungskomponente geeignet. Diese festkörperreichen Beschichtungsmittel werden insbesondere angewendet in der Lackierung von Metallblechen (vor allem bei der Automobilserien- und -reparaturlackierung, sowie für allgemeine Industrie-Anwendungen, wie z. B. Stahlbrücken), der Kunststoff- und Holzlackierung sowie im Bereich der Beschichtung von Textilien, Leder, Papier und Baustoffen.

Die niedermolekularen Polyester-Polyole und diese niedermolekularen Polyester-Polyole enthaltende Mischungen können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate oder Anhydridgruppen enthaltende Verbindungen einzeln oder in Kombination. Der Vernetzer wird jeweils in solch einer Menge zugesetzt, daß das Verhältnis der Anzahl der OH-Gruppen des niedermolekularen Polyester-Polyols (bzw der diese enthaltenden Mischungen) zur Anzahl der reaktiven Gruppen des Vernetzers zwischen 0,3 : 1 und 3 : 1 lieg

Als Härterkomponente geeignete Aminoplastharze sind bevorzugt Harnstoff-, Melamin- und/oder Benzoguanaminharze. Es handelt sich hierbei um verätherte Harnstoff-, Melamin- bzw. Benzoguanamin-Formaldehyd-Kondensationsprodukte. Geeignete Mischungen liegen im Bereich von 50 : 50 bis 90 : 10 für die Verhältnisse der Massen der niedermolekularen Polyester-Polyole und der Vernetzer, jeweils auf die Masse des Festharzes bezogen. Geeignete Phenolharze und ihre Derivate können auch als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 90 bis 200 °C, z.B. in 10 bis 30 Minuten vorgenommen werden.

Für die Härtung der erfindungsgemäßen Produkte unter Vernetzung eignen sich Polyisocyanate, besonders bei moderaten Temperaturen bzw. bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie Hexamethylendiisocyanat, 2,2,4- und 2,4,4-Trimethyl-1,6-hexamethylendiisocyanat, Dodekamethylendiisocyanat, Tetramethyl-p-xylylendiisocyanat, 1,4-Diisocyanatocyclohexan, 1-Isocyanato-3,3,5-trimethyl-5-isocyanatomethylcyclohexan (IPDI), 2,4'- und 4,4'-Diisocyanato-dicyclohexylmethan, 2,4'- und 4,4'-Diisocyanato-diphenylmethan sowie Gemische dieser Isomeren mit ihren höheren Homologen, wie sie in an sich bekannter Weise durch Phosgenierung von Anilin/-Formaldehyd-Kondensaten zugänglich sind, 2,4- und 2,6-Diisocyanatotoluol und beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP-A 0 470 461 beschrieben werden.

Zu den besonders bevorzugten modifizierten Polyisocyanaten gehören das N,N',N"-Tris-(6-isocyanatohexyl)-biuret und seine Gemische mit seinen höheren Homologen, sowie das N,N',N"-Tris-(6-isocyanatohexyl)-isocyanurat bzw. dessen Gemische mit seinen höheren, mehr als einen Isocyanuratring aufweisenden Homologen.

Für eine Härtung bei erhöhter Temperatur kommen zusätzlich verkappte Polyisocyanate, sowie Polycarbonsäuren und deren Anhydride in Frage.

Die erfindungsgemäßen niedermolekularen Polyester-Polyole und die diese enthaltenden Mischungen eignen sich besonders gut zur Herstellung von festkörperreichen, lösungsmittelhaltigen Klar- und Decklacken sowie für Füller.

In Beschichtungsmitteln, die mit den erfindungsgemäßen niedermolekularen Polyester-Polyolen bzw. den diese enthaltenden Mischungen hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Silikonöle, Zusatzstoffe wie Celluloseester, besonders Celluloseacetobutyrat, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate etc., viskositätsbeeinflussende Zusätze, Mattierungsmittel, UV-Absorber und Lichtschutzmittel, Antioxidantien und/oder Peroxidzersetzer, Entschäumer und/oder Netzmittel, aktive Verdünner-Reaktiwerdünner und dergleichen.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösungsmitteln (z.B. CO₂) in eine applikationsfertige Form gebracht werden. Auto-, Industrie-, Kunststoff-, Holz-, Baustoff- und Textillacke mit ausgezeichneten Eigenschaften lassen sich mit Bindemitteln oder Bindemittel-Mischungen erhalten, die mit den erfindungsgemäßen niedermolekularen Polyester-Polyolen hergestellt werden. Diese Bindemittel können sowohl zur Herstellung von Zwischenschichten als auch von pigmentierten oder unpigmentierten Decklacken eingesetzt werden.

Hierzu werden die Lacke im allgemeinen innerhalb des Temperaturbereichs von -20 bis +100 °C, vorzugsweise von -10 bis +80 °C ausgehärtet.

### Beispiele:

In den nachfolgenden Beispielen bedeuten alle Angaben mit der Einheit "%" Massenanteile (g/100g) des betreffenden Stoffes in der Mischung, soweit nicht anders angegeben. "Teile" sind stets Massenteile. Konzentrationsangaben in "%" sind Massenanteile des gelösten Stoffes in g in 100 ml der Lösung.

### Ia Herstellung der niedermolekularen Polyester-Polyole

Die Ausgangskomponenten wurden unter Stickstoff auf 190 bis 200 °C erhitzt und das gebildete Reaktionswasser laufend entfernt. Die Temperatur wurde kontinuierlich auf 220 °C erhöht, bis die Säurezahl zwischen 15 und 25 mg KOH/g war. Danach wurde das niedermolekulare Polyester-Polyol zu einer 80 %igen Lösung mit Butylacetat ("80 BAC") angelöst (Tabelle 1). In der Tabelle werden die Stoffmengenanteile der Ausgangskomponenten in der Maßeinheit mol/100 mol = % angegeben.

**Tabelle 1**

| Oligoesterpolyol/80 BAC | | | | | |
|---|---|---|---|---|---|
| | | 1 | 2 | 3 | V1 |
| 3(4),8(9)-Bishydroxymethyl-tricyclo[5.2.1.0^{2,6}]decan ⁽⁺⁾ | | 12,4 | 22,0 | 24,5 | - |
| Neopentylglykol | | 47,0 | 41,9 | 13,5 | 23,4 |
| Hexahydrophthalsäureanhydrid | | 40,6 | 36,1 | 40,0 | 46,9 |
| Trimethylolpropan | | - | - | 22,0 | 29,7 |
| Kenndaten: | | | | | |
| Säurezahl nach DIN 53402 | in mg/g | 23 | 20 | 18 | 23 |
| OH-Zahl nach DIN 53240 T2 | in mg/g | 179 | 221 | 215 | 185 |
| Viskosität 50% BAC. 23°C nach DIN EN ISO 3219 | in mPa·s | 10 | 17 | 29 | 51 |
| gewichtsmittlere molare Masse^{#}M_{w} | in g/mol | 1040 | 880 | 1240 | 4430 |
| zahlenmittlere molare Masse^{#} Mₙ | in g/mol | 735 | 620 | 770 | 1665 |
| U=M_{w}/Mₙ | | 1,4 | 1,4 | 1,6 | 2,7 |
| Hazen-Faibzahl (Lff.) nach DIN 53995 | | 15 | 25 | 45 | 105 |
| Aussehen | | klar | klar | klar | klar |
| BAC: n-Butylacetat | | | | | |

| | | | | | |
|---|---|---|---|---|---|
| ^{#}: durch GPC (Polystyrol-Eichung, Fa. Polymer Standards Service GmbH, Mainz) gemessen * V1 ist Beispiel 1 der EP-A 0 705 858; für deren Beispiel 2 ergibt sich: M_{w} = 11400 g/mol, Mₙ = 2070 g/mol, U = 5,5 Viskosität 50% gelöst in BAC, 23 °C, nach DIN EN ISO 3219: 92 mPa·s | | | | | |
| ⁺ Handelsname: TCD-Alkohol DM (Celanese GmbH, Oberhausen) Lff.: Lieferform | | | | | |

### Ergebnis:

Die erfindungsgemäßen niedermolekularen Polyester-Polyole weisen gewichtsmittlere molare Massen M_{w} im Bereich von Oligomeren (500 bis 1500 g/mol) und enge Verteilungen U<2 auf.

Die Viskositäten ihrer 50 %igen Lösungen (50 g Polymer in 100 g Lösung) in Butylacetat (nach DIN EN ISO 3251) sind maximal 40 mPa·s (gemessen gemäß DIN EN ISO 3219 bei 23 °C).

### Ib Herstellung von Acrylat-Mischcopolymerisat

### Vorprodukt: Oligoesterpolyol 4

Das Oligoesterpolyol nach Beispiel 3 wird hergestellt und nachfolgend angelöst mit einem Aromatengemisch (Solventnaphtha 150/180 (SNA), z.B. Shellsol A, Fa. Shell Chemicals) zu einer Lösung mit einem Festkörper-Massenanteil von 78,5 % (DIN EN ISO 3251).

**Tabelle 2**

| Kennwerte | | |
|---|---|---|
| | | |
| Säurezahl nach DIN 53402 | mg/g | 17,9 |
| OH-Zahl nach DIN 53240 T2 | mg/g | 210 |
| Visk 50 % SNA, 23°C nach DIN EN ISO 3219 | mPa·s | 102 |
| gewichtsmittlere molare Masse^{#} M_{w} | g/mol | 1319 |
| zahlenmittlere molare Masse^{#} Mₙ | g/mol | 813 |
| U=M_{w}/Mₙ | | 1,6 |

| | | |
|---|---|---|
| ^{#}: durch GPC (Polystyrol-Eichung, Fa Polymer Standards Service GmbH, Mainz) gemessen | | |

### Neues Acrylat-Mischpolymerisat

In einen mit Rührer, Heiz- und Kühlsystem, Inertgaseinleitung sowie Zugabeeinrichtung ausgestatteten 2-1-Dreihalskolben wurden 222 g der Lösung des Oligopolyesterpolyols 4 und 237,4 g Solvent Naphtha 150/180 (Kohlenwasserstoff-Gemisch mit einem Siedebereich von 150 bis 180 °C) vorgelegt, mit Stickstoff inertisiert und auf die Siedetemperatur von 168 °C geheizt. Danach wurden 281,9 g Acrylsäurebutylester, 59,4 g Methacrylsäuremethylester, 227,5 g Hydroxyäthylmethacrylat, 14,8 g Acrylsäure, 105,6 g Styrol und 7,9 g tert.-Dodecylmercaptan über den Tropftrichter innerhalb von 6 Stunden zudosiert. Gleichzeitig wurden 19,8 g Di-tert-amylperoxid gelöst in 99 g Solvent Naphtha 150/180 zudosiert. Nach 6 Stunden wurde mit 2 g Di-tert-amylperoxid in 10 g Solvent Naphtha 150/180 nachinitiiert und weitere 2 Stunden nachreagiert. Das Produkt wurde mit 100 g BAC auf 70,8 % Festkörper-Massenanteil (bestimmt nach DIN EN ISO 3251) eingestellt.

Das Endprodukt war hoch transparent und zeigte folgende Kenndaten:
Säurezahl 11,5 mg/g, Hydroxylzahl 99 mg/g, dyn. Viskosität (nach DIN EN ISO 3219, bei 23 °C, Lieferform) 6510 mPa·s, dyn. Viskosität (mit BAC-Zusatz auf 50 % Festkörper-Massenanteil verdünnt, nach DIN EN ISO 3219, bei 23 °C) 70 mPa·s.
Die gewichtsmittlere molare Masse M_{w} betrug 6035 g/mol, die Uneinheitlichkeit U war 2,8 (PS-Eichung).

### Ic Herstellung einer Mischung (Blend 1, B1)

Es wurde eine Mischung aus dem Polyesterpolyol 3 (80%ig in BAC) und dem niedermolekularen Acrylatcopolymer der EP-A 0 638 591 hergestellt in der Weise, daß die gleichen Massen der Festharze vermischt werden:

| | |
|---|---|
| Polyester-Polyol 3/80 BAC | 100 g Einwaage |
| niedermolekulares Acrylatcopolymer 1 aus EP-A 0 638 591/75,1 BAC | 106,5 g Einwaage |
| | 206,5 g |

Diese Mischung wurde durch Zusatz von BAC auf einen Festkörper-Massenanteil von 75 % eingestellt.

**Tabelle 3**

| Kennwerte der Mischung B1 | | |
|---|---|---|
| Säurezahl | mg/g | 14,8 |
| OH-Zahl | mg/g | 181 |
| Visk. 50 % BAC, 23°C nach DIN EN ISO 3219 | mPa·s | 39 |
| Hazen Farbzahl (DEN 53995; Pt/Co) | | 46 |
| Aussehen | | klar |

### Ergebnis:

Die Mischung zwischen erfindungsgemäßem Polyester und Acrylatcopolymerisat (aus EP-A 0 638 591) ist transparent. Es liegt eine verträgliche, homogene Mischung (B1) vor.

Die Polyesterpolyole der Vergleichsbeispiele 1 und 2 (Beispiele 1 und 2 der EP-A 0 705 858) weisen weder die geringen Molmassen M_{w} auf, noch besitzen sie derart niedrige Lösungsviskositäten von maximal 40 mPa·s (z.B. nach den oben genannten Bedingungen gemessen).

Die erfindungsgemäßen niedermolekularen Polyester-Polyole sind unverdünnt, im erkalteten Zustand (23 °C), feste Massen. Dies bedeutet, daß sie Glasübergangstemperaturen oberhalb von 20 °C aufweisen.

### II Herstellung der Lacke

Zur Herstellung der erfindungsgemäßen härtbaren Beschichtungsmittel werden die Komponenten bestehend aus einem erfindungsgemäßen niedermolekularen Polyester-Polyol oder einer Mischung organischer Polyhydroxyverbindungen enthaltend mindestens ein erfindungsgemäßes niedermolekulares Polyester-Polyol mit den Hilfs- und Zusatzstoffen, Lösungsmitteln und Vernetzern im beschriebenen Mischungsverhältnis gemischt und mit weiterem Verdünnungsmittel auf die Auslaufzeit ("Spritzviskosität") von 21 Sekunden mit dem Auslaufbecher (DIN 52 211, 23 °C) eingestellt. Bei Bindemittel-Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem erfindungsgemäßen niedermolekularen Polyester-Polyol oder einer Mischung mehrerer erfindungsgemäßer oder anderer Polyole gegebenenfalls unter Zusatz eines geeigneten speziellen Anreibeharzes in einem Dispergieraggregat geeigneter Bauweise eine Pigmentpaste erzeugt. Diese wird so oder unter Zugabe weiteren Bindemittels auf Basis der Komponenten oder einer Mischung derselben oder aber eines Fremdharzes, das mit den übrigen Komponenten des betreffenden Lacksystems verträglich ist, gemischt und unter Zufügung weiterer Verdünnungsmittel oder lacktypischer Zusätze komplettiert. Die Topfzeit und die Eigenschaften der resultierenden Filme hängen dabei von den Verfahrensbedingungen ab, d.h. von der Art und Menge der Ausgangsstoffe, Dosierung des Katalysators, der Temperaturführung etc. Die Härtung kann diskontinuierlich betrieben oder kontinuierlich durchgeführt werden, beispielsweise mittels einer automatischen Lackiervorrichtung.

### II a Herstellung der "ultra high solid" - Klarlacke

Mit den in der Tabelle 4 angegebenen Einwaagen der Komponenten wurden Klarlacke hergestellt und durch Zugabe von weiterem Lösunsgmittel-Gemisch anschließend sämtlich auf eine Auslaufzeit von 21 s eingestellt (DIN 53211, bei 23 °C).

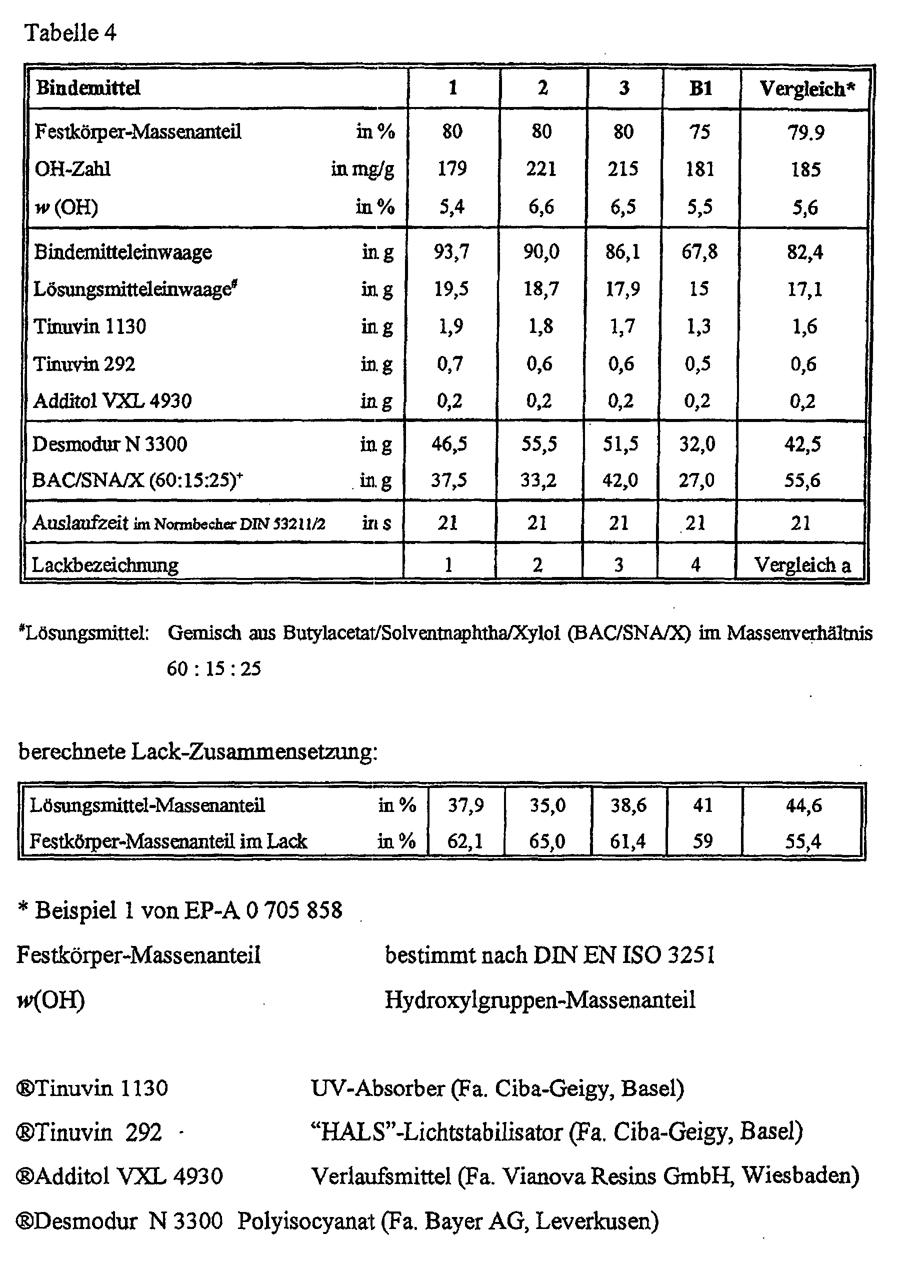

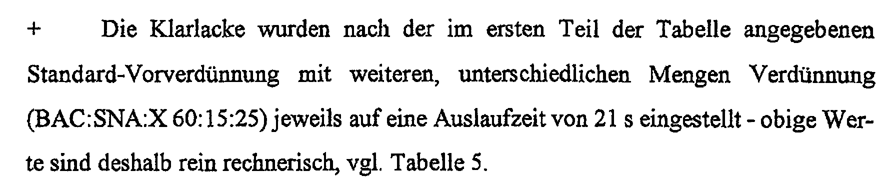

### IIb Herstellung eines "ultra high solid" Spritzfüllers

Gemäß der Rezeptur von Tabelle 5 wurden Spritzfüller mit dem erfindungsgemäßen niedermolekularen Polyester-Polyol hergestellt und geprüft, im Vergleich zu dem Polyesterpolyol aus der EP-A 0 705 858, Beispiel 1.

**Tabelle 5**

| **Bindemittel** | | **3** | **Vergleich** |
|---|---|---|---|
| Festkörper-Massenanteil nachDIN EN ISO 3251 | in % | 80 | 79,9 |
| OH- Zahl | in mg/g | 215 | 185 |
| Bindemitteleinwaage | in g | 16,5 | 16,5 |
| Lösungsmittelgemisch | in g | 13,5 | 18,0 |
| Pigmentgemisch | in g | 58,6 | 58,6 |
| Additol VXL 4930 | in g | 0,04 | 0,04 |
| Additol XL 280 | in g | 1,3 | 1,3 |
| Additol XL 251 | in g | 1,1 | 1,1 |
| Entschäumer | in g | 0,2 | 0,2 |
| Katalysator | in g | 0,33 | 0,33 |
| Desmodur N 3300 | in g | 9,9 | 8,5 |
| Lösungsmittelgemisch | in g | 6,6 | 5,7 |
| **Lackbezeichnung** | | **3** | **Vergleich b** |
| Lösungsmittelgemisch: Methoxypropylacetat, Butylacetat, Xylol im Massenverhältnis 1 : 1 : 1 | | | |
| Pigmentgemisch: bestehend aus 13,8 Teilen Titandioxid (Kronos Titan GmbH, Leverkusen), 0,1 Teilen ®Printex U (Degussa, Frankfurt/Main), 47,1 Teilen Microtalk (Naintsch Mineralwerke GmbH, Graz), und 39 Teilen Bariumsulfat (Deutsche Baryt Industrie, Bad Lauenburg) | | | |
| ®Additol VXL 4930: Verlaufmittel (Vianova Resins GmbH, Wiesbaden) | | | |
| ®Additol XL 280: Antiabsetzpaste (Vianova Resins GmbH, Wiesbaden) | | | |
| ®Additol XL 251: Netzmittel (Vianova Resins GmbH, Wiesbaden) | | | |
| Entschäumer: ®Perenol El (Henkel KGaA, Düsseldorf) | | | |
| Katalysator: ®Metatin 712, 1 %ige Lösung in Xylol (Acima AG, Buchs) | | | |
| ®Desmodur N 3300: Polyisocyanat (Bayer AG, Leverkusen) | | | |

Oben beschriebene Beschichtungsmittel wurden nach der dem Fachmann bekannten Art hergestellt und nach Zugabe der Polyisocyanatlösung mit einem Lösungsmittelgemisch bestehend aus Methoxypropylacetat, Butylacetat, Xylol im Verhältnis 1 :1 : 1 auf Verarbeitungsviskosität (21 s Auslaufzeit nach DIN 53211, 23 °C) eingestellt.

Dabei ergaben sich die folgenden Festkörper-Massenanteile (nach DIN EN ISO 3251):

**Tabelle 6**

| **Lackbezeichnung** | | **3** | **Vergleich b** |
|---|---|---|---|
| Festkörper-Massenanteil | in % | 75 | 70 |

### IIc Herstellung von "ultra high solid" Decklacken

Entsprechend der Rezeptur von Tabelle 7 wurden weiß pigmentierte Decklacke mit dem erfindungsgemäßen niedermolekularen Polyesterpolyol hergestellt und im Vergleich zu dem Polyesterpolyol aus der EP-A 0 705 858, Beispiel 1, geprüft.

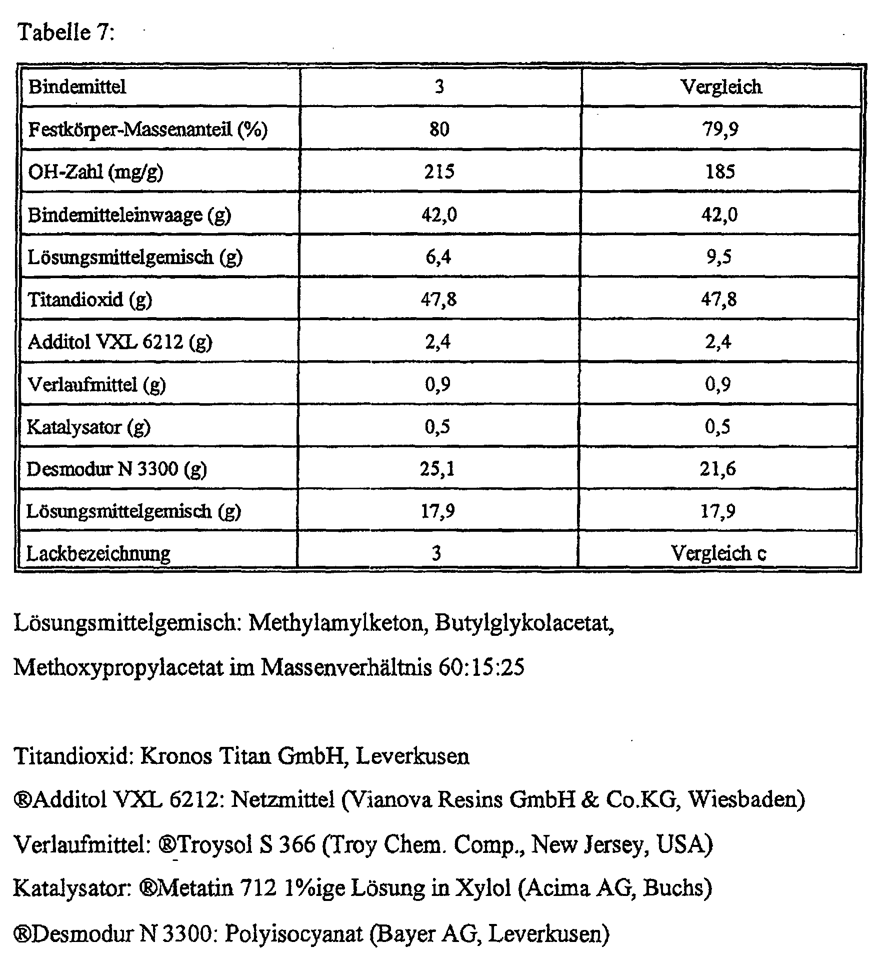

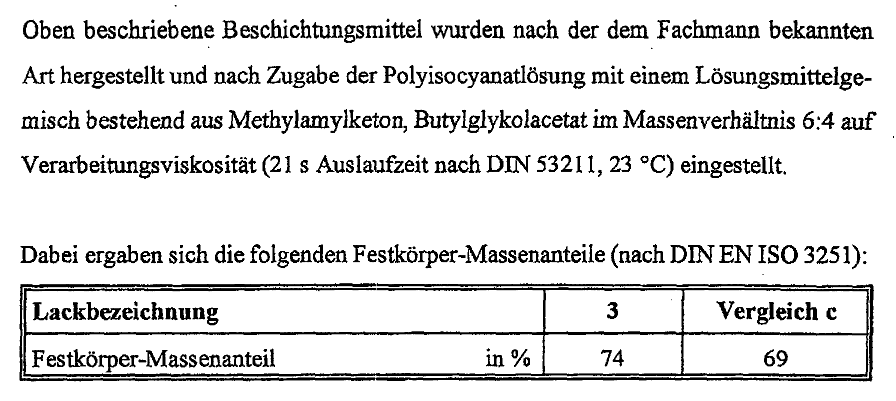

### III Lacktechnische Prüfung

### IIIa Lacktechnische Prüfung der "very high solid" Klarlacke

Die wie in II gefertigten Lacksysteme wurden mittels 200 µm-Rakel auf gereinigte Glasplatten appliziert und nach Lufttrocknung geprüft.

**Tabelle 8**

| Applikation: Luftfeuchtigkeit (rel.) 65 % | | | | | | |
|---|---|---|---|---|---|---|
| Lackbezeichnung | | 1 | 2 | 3 | 4 | Vergleich a |
| Aussehen | | transparent | transparent | transparent | transparent | transparent |
| Ausgang/Topfzeit^{a)} | in h | 3 bis 4 | 2 bis 3 | 4 | 4 | 4 |
| Klebfreizeit^{b)} | in h | 4 | 3,5 | 4,5 | 3,5 | 3,5 |
| Festkörper-Massenanteil ^{c)} | in % | 66,0 | 68,2 | 65,0 | 62 | 59,1 |

| | | | | | | |
|---|---|---|---|---|---|---|
| ^{a)} Zeit bis zur Verdoppelung der Ausgangs-Viskosität des Lackes | | | | | | |
| ^{b)} Zeit, bis der Lack nicht mehr klebt (Daumenprüfüng) | | | | | | |
| ^{c)} praktisch ermittelter Festkörper-Massenanteil im Lack (DIN EN ISO 3251) | | | | | | |

### Ergebnis:

Die erreichten Festkörper-Massenanteile im Klarlack sind größer 60 %. Alle Produkte trocknen rasch an.

Das Vergleichsbeispiel zeigt einen Festkörper-Massenanteil im Lack von knapp unter 60%.

### UV-Vergilbung:

Probe: 300 µm Naßfilmaufzug auf weiße Kacheln Durch eine UV-Bestrahlungs-Anlage (Geschwindigkeit 4 m/min, Lampenleistung 2 x 80 W/cm) wurden die 4 Kacheln mit den Lacken enthaltend die erfindungsgemäßen Bindemittel inkl. die Vergleichskachel (Lack aus dem Vergleichs-Polyester-Polyol gemäß EP-A 0 705 858) 10, 20 und 30 Runden geschickt.

### Ergebnis:

Eine Vergilbung war bei den Lacken enthaltend die erfindungsgemäßen niedermolekularen Polyester-Polyole und bei dem Vergleich nicht feststellbar.

### Mechanische Werte:

forcierte Trocknung: 10 Minuten ablüften, 30 Minuten bei 80 °C

### 1) auf Glasplatten

**Tabelle 9**

| **Lack** | **1** | **2** | **3** | **4** | **Vergleich a** |
|---|---|---|---|---|---|
| Trockenfilmdicke (ISO 2808) in µm | 52 | 55 | 52 | 55 | 40 |

| Pendelhärte nach König (DIN 53157) | | | | | |
|---|---|---|---|---|---|
| nach 1 h bei RT in s | 155 | 179 | 186 | 180 | 193 |
| nach 1 d bei RT in s | 175 | 193 | 207 | 210 | 206 |
| h = Stunde; d = Tag; RT = Raumtemperatur | | | | | |

### Ergebnis:

Die erreichten Pendelhärten liegen hervorragend hoch. Es ist keine Einbuße auf Grund des extrem niedermolekularen Bindemittels zu erkennen.

### 2) auf kaltgewalztem Blech

**Tabelle 10**

| **Lack** | **1** | **2** | **3** | **4** | **Vergleich a** |
|---|---|---|---|---|---|
| Trockenfilmdicke nach DIN 50982 in µm | | | | | |
| nach 1 h RT | 46 | 63 | 64 | 60 | 63 |
| nach 1 d RT | 46 | 63 | 64 | 60 | 63 |

| Tiefung nach ISO 1520 in mm | | | | | |
|---|---|---|---|---|---|
| nach 1 h RT | >10 | >10 | >10 | >10 | >10 |
| nach 1 d RT | >10 | >10 | >10 | >10 | >10 |

| Gitterschnitt nach DIN 53151 | | | | | |
|---|---|---|---|---|---|
| nach 1 h RT | 0 | 0-1 | 0 | 0 | 2-3 |
| nach 1 d RT | 0-1 | 0 | 0 | 0-1 | 5 |

### Ergebnis:

Alle Produkte zeigen auf kaltgewalztem Blech eine gute Elastizität. Die Haftung der erfindungsgemäßen Produkte ist zugleich hervorragend. Die Haftung des Vergleichsproduktes ist hingegen mangelhaft.

### III b Lacktechnische Prüfung des Spritzfüllers

Die nach II b erhaltenen Lacksysteme wurden durch Spritzen auf entfettete Bleche appliziert (Trockenfilmstärke ca. 70 µm). Pendelhärte, Tiefung und Gitterschnitt wurden nach 7 Tagen Trocknung bei Raumtemperatur geprüft.

**Tabelle 11**

| **Lackbezeichnung** | **3** | **Vergleich b** |
|---|---|---|
| Festkörper-Massenanteil nach DIN EN ISO 3251 in % | 75 | 70 |
| Potlife in h | 2,5 | 2 |
| Klebfreizeit in h | 2 | 2,5 |
| Pendelhärte König nach DIN 53157 in s | 120 | 115 |
| Tiefung nach ISO 1520 in mm | 5 | 5 |
| Gitterschnitt nach DIN 53151 | Gt0 bis Gt1 | Gt5 |
| "Potlife": Zeit bis zur Verdoppelung der Ausgangsviskosität des Lackes Klebfreizeit: Zeit, bis der applizierte Lackfilm nicht mehr klebt (Daumenprüfung) Gitterschnitt: Beurteilung, Gt 0 = bester Wert, Gt 5 = schlechtester Wert | | |

### Ergebnis:

Der Füller auf Basis des erfindungsgemäßen Bindemittels zeigt längeres Potlife und zugleich kürzere Klebfreizeit als der Vergleich. Die Haftung des erfindungsgemäßen Produktes ist hervorragend, die des Vergleichsproduktes hingegen mangelhaft.
Außerdem zeigt die Füllerformulierung des Vergleiches einen um 5% niedrigeren Festkörper-Massenanteil bei gleicher, vorgegebener Viskosität des applikationsfertigen Lackes (gemessen über die Auslaufzeit nach DIN 53 211, 21 Sekunden).
Bei vollkommen identischen Applikationsbedingungen erhält man aus diesem Grund mit dem Lack 3 um ca. 20 % höhere Trockenfilmstarken als mit dem Lack gemäß dem Vergleichsbeispiel.

### IIIc Lacktechnische Prüfung der Decklacke

Die nach IIc erhaltenen Lacksysteme wurden mittels 200 µm Rakel auf gereinigte Glasplatten appliziert und nach Lufttrocknung geprüft.

**Tabelle 12**

| Applikation: Luftfeuchtigkeit (rel.) 65 % | | | | |
|---|---|---|---|---|
| **Lackbezeichnung** | | **3** | **4** | **Vergleich c** |
| Ausgang/Topfzeit ^{a)} | in h | 4 | 4 | 4 |
| Klebfreizeit^{b)} | in h | 4,5 | 3,5 | 3,5 |
| Festkörper-Massenanteil ^{c)} | in % | 74 | 62 | 69 |

| | | | | |
|---|---|---|---|---|
| ^{a)} Zeit bis zur Verdoppelung der Ausgangs-Viskosität des Lackes | | | | |
| ^{b)} Zeit, bis der Lack nicht mehr klebt (Daumenprüfung) | | | | |
| ^{c)} praktisch ermittelter Festkoqaer-Massenanteil im Lack (DIN EN ISO 3251) | | | | |

### Ergebnis:

Der Festkörper-Massenanteil im Decklack auf Basis des erfindungsgemäßen niedermolekularen Polyesterpolyols ist größer 70 %.

Das Vergleichsbeispiel zeigt einen Festkörper-Massenanteil im Lack von knapp unter 70 %.

### Mechanische Werte:

forcierte Trocknung: 10 Minuten ablüften, 30 Minuten bei 80 °C

### 1) auf Glasplatten

**Tabelle 13**

| **Lack** | | **3** | **Vergleich c** |
|---|---|---|---|
| Trockenfilmdicke-(ISO 2808) | in µm | 60 | 55 |
| Pendelhärte nach König (DIN 53157) | | | |
| nach 1 h bei RT | in s | 143 | 145 |
| nach 1 d bei RT | in s | 180 | 178 |
| h = Stunde; d = Tag; RT = Raumtemperatur | | | |

### Ergebnis:

Die erreichten Pendelhärten liegen hervorragend hoch. Es ist keine Einbuße auf Grund des extrem niedermolekularen Bindemittels zu erkennen.

### 2) auf kaltgewalztem Blech

**Tabelle 14**

| **Lack** | **3** | **Vergleich c** |
|---|---|---|
| Trockenfilmdicke nach DIN 50982 in µm | 65 | 65 |

| Tiefung nach ISO 1520 in mm | | |
|---|---|---|
| nach 1 h RT | >10 | >10 |
| nach 1 d RT | >10 | >10 |

| Gitterchnitt nach DIN 53151 | | |
|---|---|---|
| nach 1 h RT | 0 | 3-3 |
| nach 1 d RT | 0-1 | 5 |

### Ergebnis:

Alle Produkte zeigen auf kaltgewalztem Blech eine gute Elastizität.

Die Haftung des erfindungsgemäßen Produktes ist zugleich hervorragend. Die Haftung des Vergleichsproduktes ist hingegen mangelhaft.

## Patentansprüche

1. Niedermolekulare Polyester-Polyole mit einer gewichtsmittleren molaren Masse M_{w} von max. 2000 g/mol, mit Hydroxylzahlen von 80 bis 300 mg/g und Säurezahlen von 5 bis 35 mg/g, enthaltend die genannten Stoffmengenanteile (in % = mol/100 mol) von Strukturbausteinen abgeleitet von
a) 1 bis 45 % aliphatische polycyclischen Polyhydroxyverbindungen mit mindestens zwei Hydroxylgruppen pro Molekül,
b) 5 bis 50 % verzweigten aliphatischen acyclischen Dihydroxyverbindungen,
c) 30 bis 50 % aliphatischen cyclischen Polycarbonsäuren
d) 0 bis 30 % aliphatischen acyclischen oder monocyclischen Polyhydroxyverbindungen mit drei oder mehr Hydroxylgruppen pro Molekül, und
e) 0 bis 10 % polyfunktionellen Verbindungen ausgewählt aus aliphatischen linearen und monocyclischen Dihydroxyverbindungen, aliphatischen linearen und verzweigten Dicarbonsäuren, aromatischen Dicarbonsäuren und Polycarbonsäuren mit drei oder mehr Carboxylgruppen pro Molekül, sowie
f) 0 bis 10 % monofunktionellen Bausteinen ausgewählt aus Monocarbonsäuren und Monoalkoholen,
wobei sich die unter a), b), c), d), e) und f) jeweils angegebenen Stoffmengenanteile zu 100 % ergänzen.

2. Niedermolekulare Polyester-Polyole nach Anspruch 1, **dadurch gekennzeichnet, daß** die Verbindungen der Gruppen a) und c) jeweils zwei funktionelle Gruppen aufweisen.

3. Niedermolekulare Polyester-Polyole nach Anspruch 1, **dadurch gekennzeichnet, daß** als Verbindung der Gruppe a) das Isomerengemisch von 3(4),8(9)-Bishydroxymethyl-tricyclo[5.2.1.0^{2,6}]decan eingesetzt wird.

4. Niedermolekulare Polyester-Polyole nach Anspruch 1, **dadurch gekennzeichnet, daß** als Verbindung der Gruppe b) Neopentylglykol eingesetzt wird.

5. Niedermolekulare Polyester-Polyole nach Anspruch 1, **dadurch gekennzeichnet, daß** als Verbindung der Gruppe c) Hexahydrophthalsäure eingesetzt wird.

6. Niedermolekulare Polyester-Polyole nach Anspruch 1, **dadurch gekennzeichnet, daß** als Verbindung der Gruppe d) Trimethylolpropan eingesetzt wird.

7. Niedermolekulare Polyester-Polyole nach Anspruch 1, **dadurch gekennzeichnet, daß** Verbindungen der Gruppe e) eingesetzt werden, wobei diese ausgewählt sind aus Äthylenglykol, Poly(oxyäthylen)glykol, Poly(oxypropylen)glykol, Cyclohexandimethanol, Adipinsäure, dimeren Fettsäuren und Trimellithsäure.

8. Gemische enthaltend die niedermolekularen Polyester-Polyole gemäß Anspruch 1 und ein separat oder in Gegenwart dieses Polyester-Polyols durch radikalische Polymerisation hergestelltes Copolymerisat, wobei das dem Copolymerisat zugrundeliegende Monomerengemisch
- mindestens ein olefinisch ungesättigtes Monomeres g) enthält, das ein AlkylEster einer aliphatischen linearen, verzweigten oder cyclischen α,β-ungesättigten Monocarbonsäure oder ein Alkyl-Diester einer olefinisch ungesättigten aliphatischen linearen, verzweigten oder cyclischen Dicarbonsäure mit 1 bis 20 Kohlenstoffatomen im Alkylrest und 3 bis 10 Kohlenstoffatomen im Säurerest des Esters ist, weiterhin
- mindestens einen Hydroxyalkylester h) einer der unter g) genannten Monooder Dicarbonsäuren, wobei der Hydroxyalkylrest abgeleitet ist von einem mindestens zweiwertigen aliphatischen linearen, verzweigten oder cyclischen Alkohol mit 2 bis 15 Kohlenstoffatomen,
- mindestens einer Carbonsäure i) ausgewählt aus den unter g) genannten Monocarbonsäuren und Dicarbonsäuren in unveresterter bzw. bei den Dicarbonsäuren auch in mit einem der unter g) genannten Alkylreste oder einem der unter h) genannten Hydroxyalkylreste halbveresterter Form, sowie gegebenenfalls
- mindestens einem weiteren olefinisch ungesättigten Monomeren j) ausgewählt aus Vinylaromaten wie Styrol, α-Methylstyrol, Vinyltoluol, Chlorstyrol, Vinylestern von aliphatischen linearen, verzweigten oder cyclischen Monocarbonsäuren mit 2 bis 20 Kohlenstoffatomen, Vinylhalogeniden wie Vinylchlorid, Vinylidenchlorid, ungesättigten Nitrilen wie Acryl- und Methacrylnitril, Amiden bzw. Diamiden der unter i) genannten Säuren, Vinyläthern von aliphatischen linearen, verzweigten oder cyclischen Alkoholen mit 1 bis 18 Kohlenstoffatomen und olefinisch ungesättigten Ketonen mit 4 bis 21 Kohlenstoffatomen.

9. Gemische gemäß Anspruch 8, wobei das Copolymerisat dem Polyester-Polyol zugemischt wird, und wobei das Massenverhältnis der Festkörper-Anteile des Polyester-Polyols und des Copolymerisats von 1:9 bis 9:1 beträgt.

10. Gemische gemäß Anspruch 8, wobei das Copolymerisat in Gegenwart des Polyester-Polyols polymerisiert wird, und wobei das Massenverhältnis der Festkörper-Anteile des Polyester-Polyols und des Copolymerisats 9:1 bis 1:9 beträgt.

11. Gemische gemäß Anspruch 8, wobei die Monomerenmischung in beiden Fällen bevorzugt Massenanteile von
g) 25 bis 80 % Alkyl(meth)acrylaten, deren Alkylreste linear, verzweigt oder cyclisch sein können und 1 bis 20 C-Atome aufweisen,
h) 1 bis 35 % Hydroxyalkyl(meth)acrylaten, deren Hydroxyalkylreste linear, verzweigt oder cyclisch sein können und 2 bis 20 C-Atome aufweisen,
i) 0,5 bis 20 % α,β-ungesättigten Carbonsäuren, und
j) 0 bis 55 % aromatischen Vinylverbindungen oder aliphatischen Vinylestern und Vinyläthern, Vinylhalogeniden, olefinisch ungesättigten Ketonen oder Aldehyden, Estern von Glycidyl- oder Methylglycidylalkohol mit olefinisch ungesättigten Carbonsäuren oder Nitrilen von α,β-ungesättigten Carbonsäuren enthält,
wobei die Summe der Massenanteile für die Komponenten g) bis j) 100 % ergeben muß und die Komponenten g) bis j) vorzugsweise so ausgewählt werden, daß durch Polymerisation dieser Mischung ohne weitere Zusätze theoretisch ein Acrylatcopolymerisat mit einer Säurezahl von mindestens 5 mg/g und einer Hydroxylzahl von 30 bis 190 mg/g resultieren würde.

12. Gemische nach Anspruch 8, wobei die Komponente g) ausgewählt ist aus Estern der Acryl- und Methacrylsäure mit Methanol, Äthanol, n- und iso-Propanol, n-, sek.-, iso- und tert.- Butanol.

13. Gemische nach Anspruch 8, wobei die Komponente h) ausgewählt ist aus Estern der Acryl- und Methacrylsäure mit Glykol, 1,2- und 1,3-Propandiol und 1,4-Butandiol.

14. Gemische nach Anspruch 8, wobei die Komponente i) ausgewählt ist aus Acryl- und Methacrylsäure.

15. Gemische nach Anspruch 8, wobei die Komponente j) ausgewählt ist aus Styrol, den isomeren Vinyltoluolen und α-Methylstryrol.

16. Einkomponenten-Lacke, enthaltend niedermolekulare Polyester-Polyole nach Anspruch 1.

17. Einkomponenten-Lacke, enthaltend Gemische von niedermolekularen Polyester-Polyolen mit Copolymerisaten nach Anspruch 8.

18. Zweikomponenten-Lacke, enthaltend niedermolekulare Polyester-Polyole nach Anspruch 1.

19. Zweikomponenten-Lacke, enthaltend Gemische von niedermolekularen Polyester-Polyole mit Copolymerisaten nach Anspruch 8.

20. Spritzfüller-Lacke, enthaltend niedermolekulare Polyester-Polyole nach Anspruch 1.

## Claims

1. A low molecular mass polyester polyol having a weight-average molar mass M_{w} of not more than 2000 g/mol, with hydroxyl numbers of from 80 to 300 mg/g and acid numbers of from 5 to 35 mg/g, comprising the stated molar proportions (in % = mol/100 mol) of structural units derived from
a) from 1 to 45% of aliphatic polycyclic polyhydroxy compounds having at least two hydroxyl groups per molecule,
b) from 5 to 50% of branched aliphatic acyclic dihydroxy compounds,
c) from 30 to 50% of aliphatic cyclic polycarboxylic acids,
d) from 0 to 30% of aliphatic acyclic or monocyclic polyhydroxy compounds having three or more hydroxyl groups per molecule, and
e) from 0 to 10% of polyfunctional compounds selected from aliphatic linear and monocyclic dihydroxy compounds, aliphatic linear and branched dicarboxylic acids, aromatic dicarboxylic acids and polycarboxylic acids having three or more carboxyl groups per molecule, and also
f) from 0 to 10% of monofunctional units selected from monocarboxylic acids and monoalcohols,
the molar proportions indicated in each case under a), b), c), d), e) and f) adding up to 100%.

2. A low molecular mass polyester polyol as claimed in claim 1, wherein the compounds of groups a) and c) in each case have two functional groups.

3. A low molecular mass polyester polyol as claimed in claim 1, wherein the isomer mixture of 3(4),8(9)-bishydroxymethyltricyclo[5.2.1.0^{2,6}]decane is employed as the compound of group a).

4. A low molecular mass polyester polyol as claimed in claim 1, wherein neopentyl glycol is employed as the compound of group b).

5. A low molecular mass polyester polyol as claimed in claim 1, wherein hexahydrophthalic acid is employed as the compound of group c).

6. A low molecular mass polyester polyol as claimed in claim 1, wherein trimethylolpropane is employed as the compound of group d).

7. A low molecular mass polyester polyol as claimed in claim 1, wherein compounds of group e) are employed, these being selected from ethylene glycol, poly(oxyethylene) glycol, poly(oxypropylene) glycol, cyclohexanedimethanol, adipic . acid, dimeric fatty acids and trimellitic acid.

8. A mixture comprising the low molecular mass polyester polyol as claimed in claim 1 and a copolymer prepared separately or in the presence of this polyester polyol by free-radical addition polymerization, the monomer mixture on which the copolymer is based comprising
- at least one olefinically unsaturated monomer g), which is an alkyl ester of an aliphatic linear, branched or cyclic α,β-unsaturated monocarboxylic acid or an alkyl diester of an olefinically unsaturated aliphatic linear, branched or cyclic. dicarboxylic acid of 1 to 20 carbon atoms in the alkyl radical and 3 to 10 carbon atoms in the acid residue of the ester,
- furthermore, at least one hydroxyalkyl ester h) of one of the mono- or dicarboxylic acids specified under g), in which the hydroxyalkyl radical is derived from an at least dihydric aliphatic linear, branched or cyclic alcohol of 2 to 15 carbon atoms,
- at least one carboxylic acid i) selected from the monocarboxylic and dicarboxylic acids specified under g), in nonesterified form or else, in the case of the dicarboxylic acids, in a form in which it is monoesterified with one of the alkyl radicals specified under g) or one of the hydroxyalkyl radicals specified under h), and also, if desired,
- at least one further olefinically unsaturated monomer j) selected from vinylaromatic compounds such as styrene, α-methylstyrene, vinyltoluene, chlorostyrene, vinyl esters of aliphatic linear, branched or cyclic monocarboxylic acids of 2 to 20 carbon atoms, vinyl halides such as vinyl chloride, vinylidene chloride, unsaturated nitriles such as acrylo- and methacrylonitrile, amides and diamides of the acids specified under i), vinyl ethers of aliphatic linear, branched or cyclic alcohols of 1 to 18 carbon atoms and olefinically unsaturated ketones of 4 to 21 carbon atoms.

9. A mixture as claimed in claim 8, where the copolymer is admixed to the polyester polyol and where the mass ratio of the solids contents of the polyester polyol and of the copolymer is from 1:9 to 9:1.

10. A mixture as claimed in claim 8, where the copolymer is polymerized in the presence of the polyester polyol; the mass ratio of the solids contents of the polyester polyol and of the copolymer being from 9:1 to 1:9.

11. A mixture as claimed in claim 8, where the monomer mixture in both cases preferably comprises proportions by mass of
g) from 25 to 80% of alkyl (meth)acrylates whose alkyl radicals can be linear, branched or cyclic and are of 1 to 20 carbon atoms,
h) from 1 to 35% of hydroxyalkyl (meth)acrylates whose hydroxyalkyl radicals can be linear, branched or cyclic and have 2 to 20 carbon atoms,
i) from 0.5 to 20% of α, β-unsaturated carboxylic acids, and
j) from 0 to 55% of aromatic vinyl compounds or aliphatic vinyl esters and vinyl ethers, vinyl halides, olefinically unsaturated ketones or aldehydes, esters of glycidyl alcohol or methylglycidyl alcohol with olefinically unsaturated carboxylic acids, or nitriles of α,β-unsaturated carboxylic acids,
the sum of the proportions by mass of components g) to j) necessarily being 100% and components g) to j) being preferably selected such that polymerization of this mixture without further additions would result theoretically in an acrylate copolymer having an acid number of at least 5 mg/g and a hydroxyl number of from 30 to 190 mg/g.

12. A mixture as claimed in claim 8, where component g) is selected from esters of acrylic and methacrylic acid with methanol, ethanol, n- and iso-propanol, n-, sec-, iso- and tert-butanol.

13. A mixture as claimed in claim 8, where component h) is selected from esters of acrylic and methacrylic acid with glycol, 1,2- and 1,3-propanediol, and 1,4-butanediol.

14. A mixture as claimed in claim 8, where component i) is selected from acrylic and methacrylic acid.

15. A mixture as claimed in claim 8, where component j) is selected from styrene, the isomeric vinyltoluenes, and α-methylstyrene.

16. A one-component coating material comprising a low molecular mass polyester polyol as claimed in claim 1.

17. A one-component coating material comprising a mixture of low molecular mass polyester polyols with copolymers as claimed in claim 8.

18. A two-component coating material comprising a low molecular mass polyester polyol as claimed in claim 1.

19. A two-component coating material comprising a mixture of low molecular mass polyester polyols with copolymers as claimed in claim 8.

20. A spray surfacer coating material comprising a low molecular mass polyester polyol as claimed in claim 1.

## Revendications

1. Polyester-polyols de bas poids moléculaire avec une masse molaire moyenne en masse Mw de 2000 g/mol max., avec des indices d'hydroxyle de 80 à 300 mg/g et des indices d'acide de 5 à 35 mg/g, contenant les proportions de quantités de substances mentionnées (en % = mol/ 100 mol) d'éléments de structure dérivés de
a) 1 à 5 % de composés polyhydroxy aliphatiques polycycliques avec au moins deux groupes hydroxyle par molécule,
b) 5 à 50 % de composés dihydroxy aliphatiques acycliques ramifiés,
c) 30 à 50 % d'acides polycarboxyliques aliphatiques cycliques,
d) 0 à 30 % de composés polyhydroxy aliphatiques acycliques ou monocycliques avec trois groupes hydroxyle ou plus par molécule, et
e) 0 à 10 % de composés polyfonctionnels choisis parmi les composés dihydroxy aliphatiques linéaires et monocycliques, les acides dicarboxyliques aliphatiques linéaires et ramifiés, les acides dicarboxyliques et les acides polycarboxyliques aromatiques avec trois groupes carboxyle ou plus par molécule, ainsi que
f) 0 à 10 % d'éléments de structure monofonctionnels choisis parmi les acides monocarboxyliques et les monoalcools,
dans lesquels les proportions de quantités de substances respectivement mentionnées en a), b), c), d), e) et f) totalisent 100 %.

2. Polyester-polyols de bas poids moléculaire selon la revendication 1, **caractérisés en ce que** les composés des groupes a) et c) présentent respectivement deux groupes fonctionnels.

3. Polyester-polyols de bas poids moléculaire selon la revendication 1, **caractérisés en ce qu'**on utilise comme composé du groupe a) le mélange d'isomères de 3(4), 8(9)-bishydroxyméthyl-tricyclo[5.2.1.0^{2,6}]décane.

4. Polyester-polyols de bas poids moléculaire selon la revendication 1, **caractérisés en ce qu'**on utilise comme composé du groupe b) le néopentylglycol.

5. Polyester-polyols de bas poids moléculaire selon la revendication 1, **caractérisés en ce qu'**on utilise comme composé du groupe c) l'acide hexahydrophtalique.

6. Polyester-polyols de bas poids moléculaire selon la revendication 1, **caractérisés en ce qu'**on utilise comme composé du groupe d) le triméthylolpropane.

7. Polyester-polyols de bas poids moléculaire selon la revendication 1, **caractérisés en ce qu'**on utilise des composé du groupe e), ceux-ci étant choisis parmi l'éthylèneglycol, le poly(oxyéthylène)glycol, le poly(oxypropylène)glycol, le cyclohexanediméthanol, l'acide adipique, les acides gras dimères et l'acide trimellique.

8. Mélanges contenant les polyester-polyols de bas poids moléculaire selon la revendication 1 et un copolymère préparé par polymérisation radicalaire séparément ou en présence de ce polyester-polyol, dans lesquels le mélange de monomères qui est à la base du copolymère contient
- au moins un monomère g) oléfiniquement insaturé, qui est un ester alkylique d'un acide monocarboxylique α,β-insaturé aliphatique linéaire, ramifié ou cyclique ou un diester alkylique d'un acide dicarboxylique oléfiniquement insaturé aliphatique linéaire, ramifié ou cyclique avec de 1 à 20 atomes de carbone dans le résidu alkyle et de 3 à 10 atomes de carbone dans le résidu acide de l'ester, de plus
- au moins un ester hydroxyalkylique h) d'un des acides mono- ou dicarboxyliques indiqués en g), dans lequel le reste hydroxyalkyle est dérivé d'un alcool au moins dihydroxylé, aliphatique linéaire, ramifié ou cyclique avec de 2 à 15 atomes de carbone,
- au moins un acide carboxylique i) choisi parmi les acides monocarboxyliques et dicarboxyliques indiqués en g) sous forme non estérifiée ou pour les acides dicarboxyliques aussi sous forme hémi-estérifiée avec un des groupes alkyle indiqués en g) ou un des groupes hydroxyalkyle indiqués en h), ainsi qu'éventuellement
- au moins un autre monomère oléfiniquement insaturé j) choisi parmi les composés aromatiques de vinyle comme le styrène, l'α-méthylstyrène, le vinyltoluène, le chlorostyrène, les esters vinyliques d'acides monocarboxyliques aliphatiques linéaires, ramifiés ou cycliques avec de 2 à 20 atomes de carbone, les halogénures de vinyle comme le chlorure de vinyle, le chlorure de vinylidène, les nitriles insaturés comme l'acrylo- et le méthacrylonitrile, les amides ou diamides des acides indiqués en i), les vinyléthers d'alcools aliphatiques linéaires, ramifiés ou cycliques avec de 1 à 18 atomes de carbone et les cétones oléfiniquement insaturées avec de 4 à 21 atomes de carbone.

9. Mélanges selon la revendication 8, dans lesquels on mélange le copolymère au polyester-polyol, et dans lesquels le rapport en masse des parties solides du polyester-polyol et du copolymère est de 1 : 9 à 9 : 1.

10. Mélanges selon la revendication 8, dans lesquels le copolymère est polymérisé en présence du polyester-polyol, et dans lesquels le rapport en masse des parties solides du polyester-polyol et du copolymère est de 9 : 1 à 1 : 9.

11. Mélanges selon la revendication 8, dans lesquels le mélange de monomères contient dans les deux cas des proportions en masse préférées de
g) 25 à 80 % de (méth)acrylates d'alkyle, dont les restes alkyle peuvent être linéaires, ramifiés ou cycliques et présentent de 1 à 20 atomes de carbone,
h) 1 à 35 % de (méth)acrylates d'hydroxyalkyle, dont les restes hydroxyalkyle peuvent être linéaires, ramifiés ou cycliques et présentent de 2 à 20 atomes de carbone,
i) 0,5 à 20 % d'acides carboxyliques α,β-insaturés, et j) 0 à 55 % de composés vinyliques aromatiques ou d'esters vinyliques et de vinyléthers aliphatiques, d'halogénures de vinyle, de cétones ou d'aldéhydes oléfiniquement insaturés, d'esters de glycidyl- ou de méthylglycidylalcool avec des acides carboxyliques oléfiniquement insaturés ou de nitriles d'acides carboxyliques α,β-insaturés,
dans lesquels la somme des parties en masse pour les composant g) à j) doit s'élever à 100 % et on choisit les composants g) à j) de préférence pour qu'il résulte de la polymérisation de ce mélange sans autres additifs théoriquement un copolymère acrylate avec un indice d'acide d'au moins 5 mg/g et un indice d'hydroxyle de 30 à 190 mg/g.

12. Mélanges selon la revendication 8, dans lesquels le composant g) est choisi parmi les esters de l'acide acrylique et méthacrylique avec le méthanol, l'éthanol, le n- et iso-propanol, le n-, sec.-, iso- et tert.-butanol.

13. Mélanges selon la revendication 8, dans lesquels le composant h) est choisi parmi les esters de l'acide acrylique et méthacrylique avec le glycol, le 1,2- et 1,3-propanediol et le 1,4-butanediol.

14. Mélanges selon la revendication 8, dans lesquels le composant i) est choisi entre l'acide acrylique et méthacrylique.

15. Mélanges selon la revendication 8, dans lesquels le composant j) est choisi parmi le styrène, les vinyltoluènes isomères et l'α-méthylstyrène.

16. Peintures à un composant, contenant des polyester-polyols de bas poids moléculaire selon la revendication 1.

17. Peintures à un composant, contenant des mélanges de polyester-polyols de bas poids moléculaire avec des copolymères selon la revendication 8.

18. Peintures à deux composants, contenant des polyester-polyols de bas poids moléculaire selon la revendication 1.

19. Peintures à deux composants, contenant des mélanges de polyester-polyols de bas poids moléculaire avec des copolymères selon la revendication 8.

20. Peintures au pistolet, contenant des polyester-polyols selon la revendication 1.
